# EUROPEAN PATENT APPLICATION

(11) **EP 4 557 444 A1**
(43) Date of publication of application: **21.05.2025**
(21) Application number: 23907900.7
(22) Date of filing: 22.12.2023
(51) Int. Cl.: H01M 10/0587, H01M 50/107, H01M 10/052, H01M 4/13, H01M 4/58, H01M 4/505, H01M 4/525, H01M 4/485, H01M 4/66

(54) **CYLINDRICAL SECONDARY BATTERY AND METHOD FOR MANUFACTURING SAME**

(30) Priority: 23.12.2022 KR 20220182927
(71) Applicant: LG Energy Solution, Ltd., Seoul 07335 (KR)
(72) Inventor: NOH, Jae-Kyo, Daejeon 34122 (KR); KIM, Soo-Hyun, Daejeon 34122 (KR); LEE, Keon-Je, Daejeon 34122 (KR); LEE, Jong-Yoon, Daejeon 34122 (KR); LEE, Hyun-Soo, Daejeon 34122 (KR)
(74) Representative: Goddar, Heinz J.
(86) International application number: PCT/KR2023/021511
(87) International publication number: WO 2024/136617

(57) **Abstract**

The present disclosure relates to a cylindrical secondary battery and a method for manufacturing the same. The cylindrical secondary battery includes a negative electrode having no negative electrode active material layer, and thus a large-scale cylindrical secondary battery having a high energy density, showing improved cell performance and ensuring safety can be provided.

## Description

The present application claims priority to Korean Patent Application No. 10-2022-0182927 filed on December 23, 2022 in the Republic of Korea, the disclosures of which are incorporated herein by reference.

### TECHNICAL FIELD

The present disclosure relates to a cylindrical secondary battery and a method for manufacturing the same. Particularly, the present disclosure relates to a cylindrical secondary battery having no negative electrode active material layer and a method for manufacturing the same.

### BACKGROUND ART

As technologies of electric vehicles, portable electronic devices, or the like have been developed, lithium secondary batteries as energy sources have been increasingly in demand.

A lithium secondary battery has a structure in which an electrode assembly including a positive electrode, a negative electrode and a separator interposed between both electrodes is stacked or wound, the electrode assembly is received in a battery casing, and an electrolyte is injected thereto. The lithium secondary battery generates electric energy through the oxidation and reduction upon the intercalation/deintercalation of lithium ions to/from the positive electrode and negative electrode.

Recently, as the cost required for the elemental materials of the lithium secondary battery has been increased rapidly, consumers need a secondary battery having high performance as well as low cost. For example, among the positive electrode active materials, lithium iron phosphate (LFP) is cheaper than nickel cobalt manganese oxide (NCM) by about 30% but is disadvantageous in that it provides an energy density about 20% lower than the energy density provided by NCM. In other words, when using such cheap LFP, there is a need for a design capable of increasing energy density.

Meanwhile, lithium secondary batteries may be classified into cylindrical, prismatic and pouch-type batteries depending on the shape of a battery casing. Among such lithium secondary batteries, a cylindrical battery has a shape obtained by allowing a jelly roll-type electrode assembly formed by stacking a sheet-like positive electrode plate, separator and negative electrode plate successively and winding the resultant stack in one direction to be received in a cylindrical battery can, and covering the top of the battery can with a cap plate, followed by sealing. The positive electrode plate and negative electrode plate are provided with a strip-like positive electrode tab and negative electrode tab, respectively, and the positive electrode tab and negative electrode tab are connected to electrode terminals and connected electrically to an external power source. For reference, the positive electrode terminal is the cap plate, and the negative electrode terminal is the battery can.

However, in the case of a cylindrical secondary battery, electric current is concentrated in the strip-like electrode tab to cause a large resistance and generation of a large amount of heat and to provide poor current collection efficiency. In addition, recently, electric vehicle technology has been developed, a high-capacity and high-energy density battery has been increasingly in demand. Under these circumstances, there is a need for developing a cylindrical battery having high performance as well as low cost.

### DISCLOSURE

### Technical Problem

The present disclosure is designed to solve the problems of the related art, and therefore the present disclosure is directed to providing a cylindrical secondary battery having high energy density per volume and improved cell performance, and a method for manufacturing the same.

The present disclosure is also directed to providing a cylindrical secondary battery which ensures stability, and a method for manufacturing the same.

### Technical Solution

The inventors of the present disclosure have found that the above-mentioned problems can be solved by the cylindrical secondary battery and method for manufacturing the same as described hereinafter.

According to the first embodiment of the present disclosure, there is provided a cylindrical secondary battery including:
an electrode assembly including a positive electrode, a negative electrode and a separator interposed between the positive electrode and the negative electrode; a battery can configured to receive the electrode assembly; and a sealing body configured to seal the open end of the battery can,
wherein the positive electrode is provided with a positive electrode current collector and a positive electrode active material layer disposed on at least one surface of the positive electrode current collector and containing a positive electrode active material, and
the negative electrode includes a negative electrode current collector but has no negative electrode active material layer.

According to the second embodiment of the present disclosure, there is provided the cylindrical secondary battery as defined in the first embodiment, wherein the negative electrode includes the negative electrode current collector alone.

According to the third embodiment of the present disclosure, there is provided the cylindrical secondary battery as defined in the first or the second embodiment, wherein the positive electrode active material includes lithium iron phosphate (LFP), lithium manganese iron phosphate (LMFP), lithium cobalt oxide (LCO), lithium nickel cobalt manganese oxide (NCM), lithium nickel cobalt aluminum oxide (NCA), lithium nickel cobalt manganese aluminum oxide (NCMA), lithium manganese oxide (LMO), overlithiated oxide (OLO), cobalt-free oxide, nickel-free oxide, manganese-free oxide, manganese-rich oxide or a mixture thereof.

According to the fourth embodiment of the present disclosure, there is provided the cylindrical secondary battery as defined in any one of the first to the third embodiments, wherein the positive electrode active material is used in an amount of 80-99 parts by weight relative to 100 parts by weight of the total weight of the positive electrode active material layer.

According to the fifth embodiment of the present disclosure, there is provided the cylindrical secondary battery as defined in any one of the first to the fourth embodiments, wherein the positive electrode has a loading amount corresponding to 110-120% relative to the loading amount of the positive electrode of a cylindrical secondary battery having a negative electrode active material layer.

According to the sixth embodiment of the present disclosure, there is provided the cylindrical secondary battery as defined in any one of the first to the fifth embodiments, wherein the positive electrode has a loading amount of 500-600 mg/cm².

According to the seventh embodiment of the present disclosure, there is provided the cylindrical secondary battery as defined in any one of the first to the sixth embodiments, wherein the positive electrode has a thickness corresponding to 110-120% relative to the thickness of the positive electrode of a cylindrical secondary battery having a negative electrode active material layer.

According to the eighth embodiment of the present disclosure, there is provided the cylindrical secondary battery as defined in any one of the first to the seventh embodiments, wherein the positive electrode has a thickness of 190-220 µm.

According to the ninth embodiment of the present disclosure, there is provided the cylindrical secondary battery as defined in any one of the first to the eighth embodiments, which shows a capacity increased by 140-180% relative to the capacity of a cylindrical secondary battery having a negative electrode active material layer.

According to the tenth embodiment of the present disclosure, there is provided the cylindrical secondary battery as defined in any one of the first to the ninth embodiments, which shows an energy density per volume of 850 Wh/L or higher.

According to the eleventh embodiment of the present disclosure, there is provided the cylindrical secondary battery as defined in any one of the first to the tenth embodiments, wherein the negative electrode current collector has a structure of the following 1) or 2):
1) a structure including a porous zone and non-porous zone, wherein the porous zone is at least partially in contact with at least one surface of the separator;
2) a multilayer structure including at least one porous sheet and at least one metallic sheet.

According to the twelfth embodiment of the present disclosure, there is provided the cylindrical secondary battery as defined in any one of the first to the eleventh embodiments, which has a form factor ratio of 0.25 or more.

According to the thirteenth embodiment of the present disclosure, there is provided the cylindrical secondary battery as defined in any one of the first to the twelfth embodiments, which is a 18650 cell, a 21700 cell, a 46110 cell, a 48750 cell, a 48110 cell, a 48800 cell or a 46800 cell.

According to the fourteenth embodiment of the present disclosure, there is provided the cylindrical secondary battery as defined in any one of the first to the thirteenth embodiments, which is a battery having a tab-less structure including no electrode tab.

According to the fifteenth embodiment of the present disclosure, there is provided the cylindrical secondary battery as defined in any one of the first to the fourteenth embodiments, which includes a liquid electrolyte.

According to the sixteenth embodiment of the present disclosure, there is provided a method for manufacturing a cylindrical secondary battery, including the steps of:
preparing a positive electrode, a negative electrode and a separator;
stacking the separator at least once in such a manner that the separator may be interposed between the positive electrode and the negative electrode, thereby forming an electrode-separator stack;
winding the electrode-separator stack in one direction to form a jelly roll-type electrode assembly;
allowing the electrode assembly to be received in a can, and injecting an electrolyte to the can in which the electrode assembly is received;
sealing the open end of the can to obtain a battery; and
carrying out activation of the battery under the conditions of room temperature and ambient pressure,
wherein the positive electrode is provided with a positive electrode current collector and a positive electrode active material layer disposed on at least one surface of the positive electrode current collector and containing a positive electrode active material, and
the negative electrode includes a negative electrode current collector but has no negative electrode active material layer.

### Advantageous Effects

The cylindrical secondary battery according to the present disclosure includes a negative electrode having no negative electrode active material layer, and thus can provide a secondary battery with increased energy density.

According to the present disclosure, the cylindrical secondary battery is economical, since it can provide high energy density per volume, even though a positive electrode active material that has a relatively low energy density and is inexpensive is applied to the positive electrode.

In addition, according to the present disclosure, it is possible to effectively reduce the heat emission inside of the cylindrical secondary battery and to realize excellent safety even in a large-scale cylindrical secondary battery having an increased volume.

The method for manufacturing a cylindrical secondary battery according to the present disclosure is convenient in terms of process, since a pressurization step for the activation of a secondary battery may be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 illustrates the stacked state of the electrode assembly provided in the cylindrical secondary battery according to an embodiment of the present disclosure, before winding.
FIG. 2 is a sectional view illustrating the cylindrical battery having a tab-less structure according to an embodiment of the present disclosure.
FIG. 3 is a sectional view illustrating the cylindrical battery having a tab-less structure according to another embodiment of the present disclosure.
FIG. 4 illustrates the structure of the jelly roll-type electrode assembly provided in the cylindrical secondary battery according to an embodiment of the present disclosure.
FIG. 5 is a graph illustrating the initial charge-discharge test result of the cylindrical secondary battery according to each of Examples 1 and 2 and Comparative Example 1.
FIG. 6 is a graph illustrating the results of determination of the life and coulombic efficiency of the cylindrical secondary battery according to each of Examples 1 and 2 and Comparative Example 1.
FIG. 7 is a graph illustrating the results of evaluation of the hot box safety of the cylindrical secondary battery according to Example 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements, unless otherwise stated.

As used herein, the expression 'A and/or B' means 'A, B or both of them'.

The inventors of the present disclosure have conducted many studies to develop a high-quality large-scale cylindrical battery and have found that it is possible to ensure the safety of a large-scale cylindrical battery and to provide high energy density and improved cell performance by using a negative electrode having no negative electrode active material layer. The present disclosure is based on this finding.

In one aspect of the present disclosure, there is provided a cylindrical secondary battery including:
an electrode assembly including a positive electrode, a negative electrode and a separator interposed between the positive electrode and the negative electrode; a battery can configured to receive the electrode assembly; and a sealing body configured to seal the open end of the battery can,
wherein the positive electrode is provided with a positive electrode current collector and a positive electrode active material layer disposed on at least one surface of the positive electrode current collector and containing a positive electrode active material, and
the negative electrode includes a negative electrode current collector but has no negative electrode active material layer.

### Electrode Assembly

The electrode assembly includes a positive electrode, a negative electrode and a separator interposed between the positive electrode and the negative electrode. The electrode assembly may be a jelly roll-type electrode assembly having a structure wound in one direction.

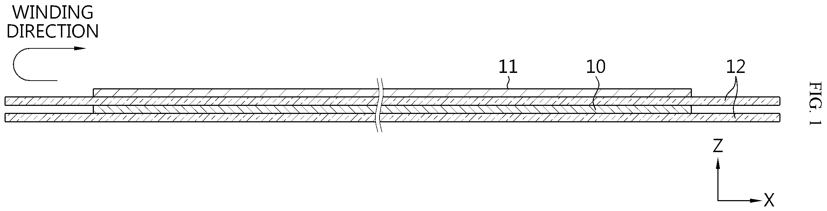

FIG. 1 shows the stack structure of the electrode assembly provided in the cylindrical secondary battery according to an embodiment of the present disclosure, before winding. Referring to FIG. 1, the electrode assembly A provided in the cylindrical secondary battery according to an embodiment of the present disclosure may be obtained by winding an electrode-separator stack, formed by stacking a separator 12, a positive electrode 10, a separator 12 and a negative electrode 11 successively at least once, in one direction X.

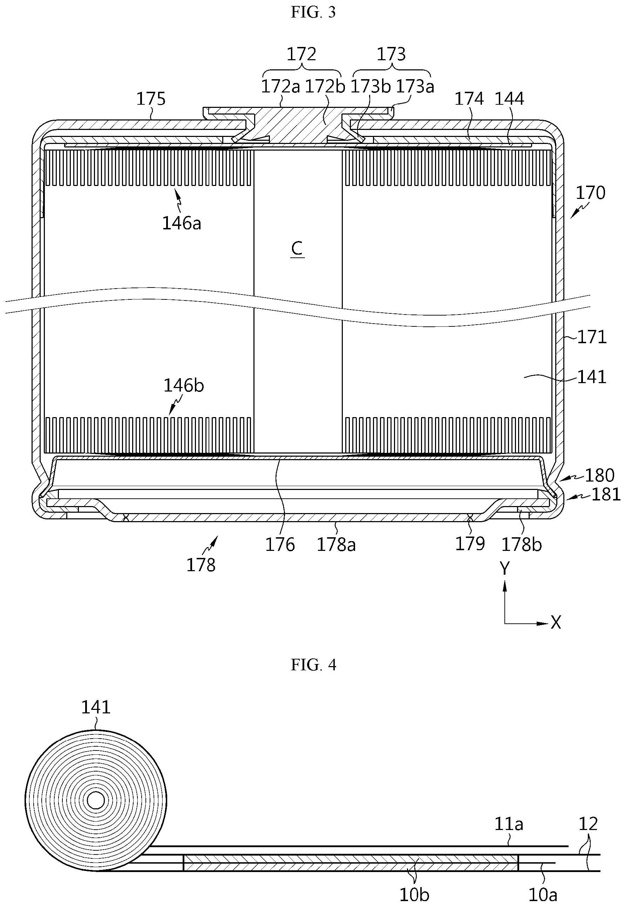

Particularly, FIG. 4 illustrates the structure of the jelly roll-type electrode assembly provided in the cylindrical secondary battery according to an embodiment of the present disclosure. Referring to FIG. 4, a separator 12, a positive electrode 10, a separator 12 and a negative electrode 11 are stacked successively, wherein the positive electrode 10 includes positive electrode active material layers 10b on both surfaces of a positive electrode current collector 10a, and the negative electrode 11 includes a negative electrode current collector alone, thereby forming a jelly roll-type electrode assembly.

Herein, the negative electrode has a structure in which no active material layer is formed, and the positive electrode has a structure including an active material layer formed on an elongated sheet-like current collector and may include a non-coated portion having no active material layer in a partial region of the current collector. Preferably, the non-coated portion of the positive electrode may be formed longitudinally along the winding direction X at one end of the current collector. When using the negative electrode having no active material layer and the positive electrode having a non-coated portion formed along the winding direction X at one end of the current collector, it is possible to realize a battery having a tab-less structure.

Particularly, the battery having a tab-less structure may be obtained through the following method. First, a separator, a positive electrode, a separator and a negative electrode are stacked successively, and then the resultant stack is wound in one direction to obtain a jelly roll-type electrode assembly. Then, the non-coated portion 22 of the positive electrode is bent toward the core, a current collecting plate is welded and bound to each of the non-coated portion of the positive electrode and the non-coated portion of the negative electrode, and the current collecting plate is connected to an electrode terminal, thereby providing a battery having a tab-less structure. Meanwhile, since the current collecting plate has a larger sectional area as compared to the strip-type electrode tab, and resistance is in proportion to the sectional area of the path through which electric current flows, the secondary battery formed to have such a structure can provide significantly reduced cell resistance.

Hereinafter, each constitutional element of the electrode assembly provided in the cylindrical secondary battery according to an embodiment of the present disclosure will be explained in detail.

### (1) Positive Electrode

The positive electrode may have a structure including a positive electrode active material layer formed on at least one surface of an elongated sheet-like positive electrode current collector, wherein the positive electrode active material layer may include a positive electrode active material, a conductive material and a binder.

Particularly, the positive electrode may be obtained by applying a positive electrode slurry prepared by dispersing a positive electrode active material, a conductive material and a binder in a solvent, such as dimethyl sulfoxide (DMSO), isopropyl alcohol, N-methyl pyrrolidone (NMP), acetone, water, or the like, to one surface or both surfaces of an elongated sheet-like positive electrode current collector, removing the solvent of the positive electrode slurry through a drying step, and carrying out pressing. Meanwhile, a positive electrode including a non-coated portion may be obtained by not applying the positive electrode slurry in a partial region of the positive electrode, such as one end of the positive electrode current collector, upon the application of the positive electrode slurry.

The positive electrode active material may include lithium iron phosphate (LiFePO₄, LFP). Particularly, the positive electrode active material may be lithium iron phosphate (LiFePO₄).

When using lithium iron phosphate as a positive electrode active material, it is possible to compensate for the irreversibility of the negative electrode during the activation of a lithium secondary battery and to increase the safety of a lithium secondary battery by functioning as a resistance body during the subsequent charge/discharge. In addition, lithium iron phosphate is cheaper than lithium nickel-cobalt-manganese oxide, which is a generally used positive electrode active material, and thus provides an advantage of price competitiveness.

However, according to the present disclosure, the positive electrode active material is not limited to lithium iron phosphate, and any material may be used as a positive electrode active material as long as it is a material that can be used conventionally as a positive electrode active material. Typical examples of the positive electrode active material include lithium manganese iron phosphate (LMFP), lithium cobalt oxide (LCO), lithium nickel cobalt manganese oxide (NCM), lithium nickel cobalt aluminum oxide (NCA), lithium nickel cobalt manganese aluminum oxide (NCMA), lithium manganese oxide (LMO), overlithiated oxide (OLO), cobalt-free oxide, nickel-free oxide, manganese-free oxide, manganese-rich oxide or a mixture thereof.

Meanwhile, when using lithium iron phosphate as a positive electrode active material, there is a problem in that a secondary battery shows relatively low energy density. Therefore, the inventors of the present disclosure have designed and finished the present disclosure so that a secondary battery may have a high level of energy density even when using lithium iron phosphate.

In the cylindrical secondary battery according to the present disclosure, the negative electrode includes no negative electrode active material layer. In addition, the cylindrical secondary battery may further include an additional amount of positive electrode active material in the volume generated by excluding the negative electrode active material. For example, since the cylindrical secondary battery may further include about 40% of the positive electrode active material in the volume generated by excluding the negative electrode active material layer, it may have higher energy density as compared to the battery including a conventional negative electrode provided with a negative electrode active material layer.

According to an embodiment of the present disclosure, the positive electrode may have a loading amount corresponding to 110-120% relative to the loading amount of the positive electrode of a cylindrical secondary battery having a negative electrode active material layer.

In addition, according to an embodiment of the present disclosure, the positive electrode may have a thickness corresponding to 110-120% relative to the thickness of the positive electrode of a cylindrical secondary battery having a negative electrode active material layer.

Particularly, the positive electrode may have a loading amount of 500-600 mg/cm², 520-580 mg/cm², or 540-560 mg/cm².

In addition, particularly, the positive electrode may have a thickness of 190-220 µm, 200-220 µm, or 200-210 µm.

When the positive electrode has the above-defined range of loading amount and/or thickness, there is an advantage in that the cylindrical secondary battery can realize higher capacity and energy, and the lithium-ion transportability may be enhanced to provide improved life characteristics.

According to the present disclosure, the term 'loading amount of a positive electrode' refers to the content of the positive electrode active material, binder polymer and conductive material contained in a positive electrode active material layer.

In addition, according to the present disclosure, the expression 'cylindrical secondary battery provided with a negative electrode active material layer' is differentiated from the cylindrical secondary battery according to the present disclosure merely in that it is provided with a negative electrode active material layer. In general, the negative electrode active material layer may include a negative electrode active material and binder polymer used generally for a cylindrical secondary battery, and the negative electrode active material layer is not particularly limited in the present disclosure.

In general, a cylindrical battery includes a cylindrical battery can in which a jelly roll-type electrode assembly including a sheet-like positive electrode plate, separator and negative electrode plate, stacked successively, is received. Since the cylindrical secondary battery according to the present disclosure is not provided with a negative electrode active material layer, an extra space may be generated by the thickness of a negative electrode active material layer inside of the battery can, as compared to a conventional cylindrical secondary battery provided with a negative electrode active material layer. In general, in the cylindrical secondary battery including a negative electrode plate provided with a negative electrode active material layer, the positive electrode has a loading amount of about 400-500 mg/cm² and a thickness of about 150-180 µm. Thus, such a cylindrical secondary battery shows a lower loading amount and smaller thickness as compared to the loading amount and thickness of the positive electrode suggested according to the present disclosure.

Therefore, according to the present disclosure, it is possible to realize advantageous effects in terms of capacity and energy by using the extra space generated by excluding the negative electrode active material layer to increase the loading amount and/or thickness of the positive electrode active material layer.

According to an embodiment of the present disclosure, the positive electrode active material may include a positive electrode active material used conventionally for a secondary battery, such as the above-described positive electrode active material, LCO, NCM, NCA, NCAM, LMO or OLO, in addition to lithium iron phosphate (LiFePO₄, LFP). Particular examples of the positive electrode active material used conventionally for a secondary battery may include: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0- 0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; lithium nickel oxides represented by the chemical formula of LiNi₁₋ₓMₓO₂ (wherein M is at least one selected from the group consisting of Co, Mn, Al, Cu, Fe, Mg, B and Ga, and x is 0.01-0.9); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an aluminum ion; disulfide compounds; Fe₂(MoO₄)₃; or the like. However, the scope of the present disclosure is not limited thereto.

The positive electrode active material may be present in an amount of 80-99 parts by weight, 85-99 parts by weight, or 90-99 parts by weight, based on 100 parts by weight of the total weight of the positive electrode active material layer.

Meanwhile, the positive electrode current collector may include various positive electrode current collectors used in the art. Particular examples of the positive electrode current collector include stainless steel, aluminum, nickel, titanium, baked carbon, copper or stainless steel surface-treated with carbon, nickel, titanium, silver, or the like. The positive electrode current collector may generally have a thickness of 3-500 µm, and fine surface irregularities may be formed on the surface of the current collector to enhance the adhesion force of the electrode active material. The current collector may be used in various shapes, including a film, a sheet, a foil, a net, a porous body, a foamed body, a non-woven web, or the like.

The conductive material is used in order to impart conductive property to an electrode, and any conductive material may be used with no particular limitation, as long as it has electron conductivity while not causing any chemical change in the corresponding battery. Particular examples of the conductive material include: graphite, such as natural graphite or artificial graphite; carbonaceous materials, such as carbon black, acetylene black, ketjen black, channel black, furnace black, lamp black, thermal black, carbon fibers or carbon nanofibers; metal powder or metal fibers, such as copper, nickel, aluminum or silver; conductive whisker, such as zinc oxide or potassium titanate; conductive metal oxide, such as titanium dioxide; conductive polymer, such as a polyphenylene derivative; or the like. Such conductive materials may be used alone or in combination. In general, the conductive material may be used in an amount of 1-30 wt%, preferably 1-20 wt%, and more preferably 1-10 wt%, based on the total weight of the positive electrode active material layer.

The binder functions to perform the adhesion of the positive electrode active materials among themselves and to improve the adhesion force between the positive electrode active material and the positive electrode current collector. Particular examples of the binder may include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated EPDM, styrene butadiene rubber (SBR), fluoro-rubber, various copolymers thereof, or the like. Such binders may be used alone or in combination. The binder may be used in an amount of 1-30 wt%, preferably 1-20 wt%, and more preferably 1-10 wt%, based on the total weight of the positive electrode active material layer.

### (2) Negative Electrode

The negative electrode includes a negative electrode current collector and is not provided with a negative electrode active material layer formed on any one surface of the negative electrode current collector. Particularly, the negative electrode may include a negative electrode current collector alone. Since the negative electrode is not provided with a negative electrode active material layer, there is an advantage in that the processing and manufacturing time and cost are reduced as compared to a negative electrode including a negative electrode active material layer and the price of the battery is reduced, and the battery may have increased energy density.

The negative electrode current collector may include negative electrode current collectors used generally in the art. Particular examples of the negative electrode current collector include copper, stainless steel, aluminum, nickel, titanium, baked carbon, copper or stainless steel surface-treated with carbon, nickel, titanium, silver, etc., aluminum-cadmium alloy, or the like. The negative electrode current collector may generally have a thickness of 3-500 µm, and fine surface irregularities may be formed on the surface of the current collector, similarly to the positive electrode current collector. The current collector may be used in various shapes, including a film, a sheet, a foil, a net, a porous body, a foamed body, a non-woven web, or the like.

According to an embodiment of the present disclosure, the negative electrode current collector may have a structure of the following 1) or 2):
1) a structure including a porous zone and non-porous zone, wherein the porous zone is at least partially in contact with at least one surface of the separator;
2) a multilayer structure including at least one porous sheet and at least one metallic sheet.

When the negative electrode current collector has a structure of 1), the non-porous zone of the negative electrode current collector may be positioned at the central portion of the negative electrode current collector.

In addition, the negative electrode current collector may have a porosity of 30-80%. When the negative electrode current collector has the above-defined range of porosity, it is possible to form an electrodeposition space upon the electrodeposition of lithium from the positive electrode to the negative electrode, and thus the cylindrical secondary battery sealed in the battery can undergoes little change in volume and perform charge/discharge stably.

As used herein, the term 'porosity' means a ratio of the volume occupied by pores based on the total volume of an object to be tested, is expressed in the unit of vol%, and may be used exchangeably with such terms as pore ratio, porous degree, or the like.

Meanwhile, when the negative electrode current collector has a multilayer structure of 2), it may have a sandwich-like structure including a metallic sheet between two porous sheets, wherein the porous sheet may have a porosity of 30-80%.

The porous sheet may include: copper; stainless steel; aluminum; nickel; titanium; baked carbon; copper or stainless steel surface-treated with carbon, nickel, titanium, silver, chromium, or the like; aluminum-cadmium alloy; or two or more of them.

The metallic sheet may include lithium, lithium alloy or a mixture thereof.

The metallic sheet may have a thickness of 0.1-10 µm. The metallic sheet having the above-defined range of thickness is preferred since it provides a suitable level of energy density and is economical.

### (3) Separator

The separator separates the negative electrode and the positive electrode from each other and provides a lithium-ion migration channel, and any separator used conventionally for a lithium secondary battery may be used with no particular limitation. Particularly, the separator that may be used includes a porous polymer film made of a polyolefin-based polymer, such as ethylene homopolymer, propylene homopolymer, ethylene/butene copolymer, ethylene/hexene copolymer or ethylene/methacrylate copolymer, or a laminate structure including two or more layers thereof. In addition, a porous nonwoven web used conventionally in the art, such as a nonwoven web including glass fibers having a high melting point, polyethylene terephthalate fibers, or the like, may be used. Further, a coated separator including a ceramic ingredient or polymer material for the purpose of ensuring heat resistance or mechanical strength may be used.

According to another embodiment of the present disclosure, the separator may further include a porous coating layer including inorganic particles and a binder polymer, on at least one surface thereof.

In the porous coating layer, the inorganic particles are bound to one another by the binder polymer, while they are packed and are in contact with each other, thereby forming interstitial volumes among the inorganic particles, and the interstitial volumes among the inorganic particles become vacant spaces to form pores.

The inorganic particles used for forming the porous coating layer may include those causing no oxidation and/or reduction in the operating voltage range (e.g. 0-5 V based on Li/Li⁺) of an electrochemical device. Particularly, when using inorganic particles having ion transportability, it is possible to enhance the ion conductivity in the electrochemical device and to improve the performance thereof. In addition, when using inorganic particles having a high dielectric constant, they contribute to an increase in dissociation degree of the electrolyte salt, particularly lithium salt, in a liquid electrolyte, and thus can improve ion conductivity of the electrolyte.

For these reasons, the inorganic particles may preferably include inorganic particles having a dielectric constant of 5 or more, preferably 10 or more, inorganic particles having lithium-ion transportability or a mixture thereof.

Non-limiting examples of the inorganic particles having a dielectric constant of 5 or more include BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, or a mixture thereof.

Particularly, such inorganic particles as BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT) and hafnia (HfO₂) not only show a high dielectric constant of 100 or more but also have piezoelectricity by which electric charges are generated upon the elongation or compression under the application of a predetermined level of press to generate a difference in electric potential between both surfaces, and thus can prevent generation of an internal short-circuit between both electrodes caused by external impact, thereby providing an electrochemical device with improved safety. In addition, when the inorganic particles having a high dielectric constant are used in combination with the inorganic particles having lithium-ion transportability, it is possible to enhance the synergic effect thereof.

The inorganic particles having lithium-ion transportability refer to inorganic particles containing lithium element, while not storing lithium but having a function of transporting lithium ions. The inorganic particles having lithium-ion transportability can transport and conduct lithium ions by virtue of a kind of defect present in the structures of the particles, and thus can improve the lithium-ion conductivity in a battery and provide the battery with improved performance. Non-limiting examples of the inorganic particles having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7), such as LiI-Li₂S-P₂S₅, or a mixture thereof.

Although the particle size of the inorganic particles in the porous coating layer is not particularly limited, the inorganic particles may preferably have a particle size of 0.001-10 µm in order to form a coating layer having a uniform thickness and to provide suitable porosity. When the particle size is less than 0.001 µm, the dispersibility of the inorganic particles may be decreased. When the particle size is more than 10 µm, the porous coating layer may have an increased thickness to cause degradation of mechanical properties. Moreover, it is highly likely that an internal short-circuit occurs during the charge/discharge of a battery due to an excessively large pore size.

The binder polymer used for forming a porous coating layer may include any one binder polymer selected from the group consisting of polyvinylidene fluoride-co-hexafluoropropylene (PVDF-HFP), polyvinylidene fluoride-co-trichloroethylene, polymethyl methacrylate, polybutyl acrylate, polyacrylonitrile, polyvinyl pyrrolidone, polyvinyl acetate, polyethylene-co-vinyl acetate, polyethylene oxide, polyarylate, cellulose aetate, cellulose acetate butyrate, cellulose acetate propionate, cyanoethyl pullulan, cyanoethyl polyvinyl alcohol, cyanoethyl cellulose, cyanoethyl sucrose, pullulan and carboxymethyl cellulose, or two or more of them. However, the scope of the present disclosure is not limited thereto.

For example, the ratio of the inorganic particles to the binder polymer used in the porous coating layer may be preferably 50:50-99:1, and more preferably 70:30-95:5. When the content ratio of the inorganic particles to the binder polymer is less than 50:50, the content of the binder polymer is increased to cause degradation of the thermal safety of the separator. In addition, the vacant spaces formed among the inorganic particles are reduced to cause a decrease in pore size and porosity, resulting in degradation of the performance of a finished battery. When the content of the inorganic particles is larger than 99 parts by weight, such an excessively low content of binder polymer may cause degradation of the peeling resistance of the porous coating layer. Although there is no particular limitation in the thickness of the porous coating layer, the porous coating layer may preferably have a thickness of 0.01-20 µm. In addition, the pore size and porosity are not particularly limited, but it is preferred that the pore size is 0.001-10 µm and the porosity is 10-90%. The pore size and porosity largely depend on the size of the inorganic particles. For example, when using inorganic particles having a particle diameter of 1 µm or less, the pores formed among the inorganic particles also shows a size of 1 µm or less. Such a pore structure is filled with an electrolyte injected subsequently thereto, and the filled electrolyte functions to transport ions. When the pore size and porosity are less than 0.001 µm and 10%, respectively, the porous coating layer may function as a resistance layer. When the pore size and porosity are more than 10 µm and 90%, respectively, mechanical properties may be degraded.

The porous coating layer may be formed by dissolving or dispersing the binder polymer in a dispersion medium, adding the inorganic particles thereto to obtain a slurry for forming a porous coating layer, and coating the slurry on at least one surface of a substrate, followed by drying. The dispersion medium preferably has a solubility parameter similar to the solubility parameter of the binder polymer to be used and has a low boiling point. This is because such a dispersion medium facilitates uniform mixing and removal of the dispersion medium subsequently. Non-limiting examples of the dispersion medium that may be used include acetone, tetrahydrofuran, methylene chloride, chloroform, dimethyl formamide, N-methyl-2-pyrrolidone (NMP), cyclohexane, water, or a mixture thereof.

After adding the inorganic particles to the dispersion including the binder polymer dispersed in the dispersion medium, pulverization of the inorganic particles is carried out preferably. Herein, the pulverization time is 1-20 hours suitably, and the pulverized inorganic particles may preferably have a particle size of 0.001-10 µm, as described above. Any conventional pulverization process may be used, and ball milling is particularly preferred.

Then, the binder polymer dispersion containing the inorganic particles dispersed therein is coated on at least one surface of a porous polymer substrate under a humidity of 10-80%, followed by drying. Any conventional coating process known to those skilled in the art may be used for coating the dispersion on the porous polymer substrate, and particular examples of the process may include various processes, such as dip coating, die coating, roll coating, coma coating and a combination thereof.

The porous coating layer may further include other additives, such as a conductive material, besides the above-described inorganic particles and binder polymer.

The finished separator according to the present disclosure may have a thickness of 1-100 µm, or 5-50 µm. When the thickness is less than 1 µm, the separator cannot realize the functions as a separator sufficiently and the mechanical properties may be degraded. When the thickness is more than 100 µm,the battery performance may be degraded during high-rate charge/discharge. In addition, the separator may have a porosity of 40-60% and an air permeability of 150-300 sec/100 mL.

### Cylindrical Lithium Secondary Battery

Hereinafter, the cylindrical lithium secondary battery according to the present disclosure will be explained in detail.

The cylindrical battery according to the present disclosure may include: an electrode assembly including a positive electrode, a negative electrode and a separator interposed between the positive electrode and the negative electrode; a battery can configured to receive the electrode assembly; and a sealing body configured to seal the open end of the battery can.

The cylindrical lithium secondary battery according to the present disclosure may be a cylindrical battery having a form factor ratio (a value calculated by dividing the diameter of a cylindrical battery by the height thereof, i.e. ratio of diameter (Φ) to height (H)) of 0.25 or more, or 0.4 or more. Herein, the term 'form factor' means a value representing the diameter and height of a cylindrical battery.

For example, the cylindrical battery according to the present disclosure may be a 18650 cell (diameter 18 mm, height 65 mm, form factor ratio 0.277), a 21700 cell (diameter 21 mm, height 70 mm, form factor ratio 0.300), a 46110 cell (diameter 46 mm, height 110 mm, form factor ratio 0.418), a 48750 cell (diameter 48 mm, height 75 mm, form factor ratio 0.640), a 48110 cell (diameter 48 mm, height 110 mm, form factor ratio 0.436), a 48800 cell (diameter 48 mm, height 80 mm, form factor ratio 0.600), or a 46800 cell (diameter 46 mm, height 80 mm, form factor ratio 0.575). In the number representing a form factor, the first two numbers represent the diameter of a cell, the next two numbers represent the height of a cell, and the last number 0 represents the circular cross-section of a cell.

The cylindrical lithium secondary battery according to the present disclosure includes a negative electrode having no negative electrode active material layer, and thus can show a high energy density per volume. According to an embodiment of the present disclosure, the cylindrical lithium secondary battery according to the present disclosure can provide a capacity increased by 140-180% based on the capacity of a cylindrical secondary battery provided with a negative electrode active material. Particularly, the cylindrical lithium secondary battery according to the present disclosure can provide an energy density of 850 or 900 Wh/L or more. The capacity can be calculated by multiplying the design capacity of the corresponding secondary battery by the average voltage thereof, followed by dividing by the volume of the corresponding battery size.

In addition, the cylindrical lithium secondary battery according to the present disclosure may realize excellent safety even in a cylindrical battery having a form factor ratio of 0.25 or 0.4 or more. Particularly, when a negative electrode active material layer is excluded, the negative electrode undergoes deposition of lithium metal form after being charged. However, according to the present disclosure, gases can be emitted easily in a predetermined direction, which is favorable to thermal safety.

Meanwhile, the cylindrical battery according to the present disclosure may be a battery having a tab-less structure, i.e. having no electrode tab, preferably. However, the scope of the present disclosure is not limited thereto.

For example, the battery having a tab-less structure may have a structure in which each of the positive electrode and negative electrode includes a non-coated portion having no active material layer, each of the positive electrode non-coated portion and negative electrode non-coated portion is disposed at each of the top end and bottom end of the electrode assembly, a current collecting plate is bound to each of the positive electrode non-coated portion and negative electrode non-coated portion, and the current collecting plate is connected to the electrode terminal.

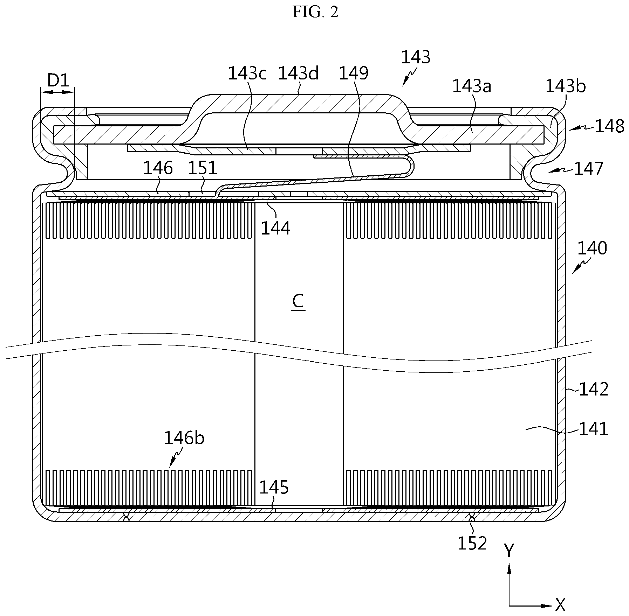

FIG. 2 is a sectional view illustrating the cylindrical battery having a tab-less structure according to an embodiment of the present disclosure. Hereinafter, the cylindrical battery according to an embodiment of the present disclosure will be explained with reference to FIG. 2. However, FIG. 2 merely illustrate an embodiment of the present disclosure, and the structure of the cylindrical battery according to the present disclosure is not limited to the scope disclosed in FIG. 2.

The cylindrical battery 140 according to an embodiment of the present disclosure includes the above-described jelly roll-type electrode assembly 141, battery can 142 configured to receive the electrode assembly 141, and a sealing body 143 configured to seal the open end of the battery can 142.

Herein, each of the positive electrode and negative electrode of the electrode assembly may include a non-coated portion having no active material layer, and may be stacked and wound in such a manner that the positive electrode non-coated portion and negative electrode non-coated portion may be disposed at the top end and bottom end of the electrode assembly, respectively. The electrode assembly was described hereinabove, and thus the constitutional elements other than the electrode assembly will be explained hereinafter.

The battery can 142 is a cylindrical container having an opening at the top and includes a conductive metallic material, such as aluminum or steel. The battery can receive the electrode assembly 141 in the internal space thereof through the top opening, together with an electrolyte (not shown).

The electrolyte that may be used herein includes various electrolytes applicable to a lithium secondary battery, and particular examples thereof include a liquid electrolyte, a solid polymer electrolyte, a gel polymer electrolyte, a solid inorganic electrolyte, a molten inorganic electrolyte, or the like, but are not limited thereto.

Particularly, the electrolyte may be a liquid electrolyte and may include an organic solvent and a lithium salt.

Any organic solvent may be used with no particular limitation, as long as it may function as a medium through which ions participating in the electrochemical reactions of a battery can pass. For example, the organic solvent may include ester, ether, imide, linear carbonate, cyclic carbonate, or the like, and may be used alone or in combination.

Particular examples of the ester as an organic solvent may include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more of them. However, the scope of the present disclosure is not limited thereto.

Particular examples of the ether as an organic solvent may include: a linear ether compound, such as dimethyl ether, diethyl ether, dipropyl ether, dibutyl ether, diisobutyl ether, ethyl methyl ether, ethyl propyl ether, ethyl t-butyl ether, dimethoxymethane, trimethoxymethane, dimethoxyethane, diethyoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethyleneglycol divinyl ether, dipropylene glycol dimethylene ether, butylene glycol ether, diethylene glycol ethyl methyl ether, diethylene glycol isopropyl methyl ether, diethylene glycol butyl methyl ether, diethylene glycol t-butylethyl ether, ethylene glycol ethyl methyl ether, or the like; a cyclic ether, such as dioxolane, methyldioxolane, dimethyldioxolane, vinyldioxolane, methoxydioxolane, ethylmethyldioxane, oxane, dioxane, trioxane, tetrahydrofuran, methyltetrhydrofuran, dimethyltetrahydrofuran, dimethoxytetrahydrofuran, ethoxytetrahydrofuran, dihydropyran, tetrahydropyran, furan, 2-methylfuran, or the like; a fluorinated ether compound, such as 1,1,2,2-tetrafluoroethyl 2,2,3,3-tetrafluoropropyl ether (TTE), bis(fluoromethyl)ether, 2-fluoromethylether, bis(2,2,2-trifluoroethyl)ether, propyl 1,1,2,2-tetrafluoroethylether, isopropyl 1,1,2,2-tetrafluoroethylether, 1,1,2,2-tetrafluoroethylisobutylether, 1,1,2,3,3,3-hexafluoropropyletherether, 1H,1H,2'H,3H-decafluorodipropylether, 1H,1H,2'H-perfluorodipropylether, or the like; or a mixture thereof.

Any lithium salt may be used with no particular limitation, as long as it is a compound capable of providing lithium ions in the lithium secondary battery. Particular examples of the lithium salt include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt may be used at a concentration of 0.1-5.0 M, preferably 0.1-3.0 M. When the lithium salt has the above-defined concentration, the electrolyte may have a suitable level of conductivity and viscosity to provide excellent electrolyte performance and to allow effective lithium-ion migration.

Besides the above-mentioned ingredients forming the electrolyte, the electrolyte may further include additives in order to improve the life characteristics of a battery, to inhibit a decrease in battery capacity and to improve the discharge capacity of a battery. Non-limiting examples of such additives include haloalkylene carbonate compound, such as difluoroethylene carbonate, pyridine, triethyl phosphite, triethanolamine, cyclic ether, ethylene diamine, n-glyme, hexamethylphosphoric acid triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethanol or aluminum trichloride, and such additives may be used alone or in combination. The additives may be used in an amount of 0.1-10 wt%, preferably 0.1-5 wt%, based on the total weight of the electrolyte.

The battery can 142 is electrically connected to the non-coated portion 146 of the negative electrode plate and functions as a negative electrode terminal that is in contact with an external power source to conduct the electric current applied from the external power source to the negative electrode plate.

If necessary, a beading portion 147 and a crimping portion 148 may be provided at the top end of the battery can 142. The beading portion 147 may be formed by press-fitting the outer circumference of the battery can 142. The beading portion 147 prevents the electrode assembly 141 received in the battery can 142 from escaping through the top opening of the battery can 142 and may function as a supporting portion by which the sealing body 143 is retained.

The crimping portion 148 may be formed at the top of the beading portion 147 and takes a form extended and bent to surround the outer circumferential surface of a cap plate 143a disposed on the beading portion 147 and a part of the top surface of the cap plate 143a.

Next, the sealing body 143 is configured to seal the open end of the battery can 142 and includes a cap plate 143a and a first gasket 143b configured to provide air-tight property between the cap plate 143a and battery can 142 and having insulating property, and if necessary, may further include a linking plate 143c coupled electrically and mechanically to the cap plate 143a. The cap plate 143a is compressed on the beading portion 147 formed in the battery can 142 and may be fixed by the crimping portion 148.

The cap plate 143a is a part made of a conductive metal and covers the top opening of the battery can 142. The cap plate 143a is connected electrically with the positive electrode plate of the electrode assembly 141, and is insulated electrically from the battery can 142 through the first gasket 143b. Therefore, the cap plate 143a may function as a positive electrode terminal of the cylindrical secondary battery. The cap plate 143a may be provided with a protrusion 143d protruding upwardly from the center thereof, and the protrusion 143d is in contact with an external power source so that electric current may be applied from the external power source.

The first gasket 143b may be interposed between the cap plate 143a and the crimping portion 148 in order to ensure the air-tight property of the battery can 142 and to insulate the battery can 142 and cap plate 143a electrically from each other.

Meanwhile, the cylindrical battery 140 according to the present disclosure may further include current collecting plates 144, 145, if necessary. The current collecting plates are bound to the positive electrode non-coated portion 146a and negative electrode non-coated portion 146b, and is connected to the electrode terminal (i.e. positive electrode terminal and negative electrode terminal).

Particularly, the cylindrical battery 140 according to the present disclosure may include a first current collecting plate 144 bound to the top of the electrode assembly 141 and a second current collecting plate 145 bound to the bottom of the electrode assembly 141.

The first current collecting plate 144 is bound to the top of the electrode assembly 141. The first current collecting plate 144 is made of a conductive metal, such as aluminum, copper or nickel, and is connected electrically with the non-coated portion 146a of the positive electrode plate. A lead 149 may be connected to the first current collecting plate 144. The lead 149 is extended toward the top of the electrode assembly and may be bound to a linking plate 143c or bound directly to the bottom surface of the cap plate 143a. The lead 149 may be bound to the other parts through welding. Preferably, the first current collecting plate 144 may be formed integrally with the lead 149. In this case, the lead 149 may have an elongated plate-like shape extended outwardly from the central portion of the first current collecting plate 144.

Meanwhile, the first current collecting plate 144 is bound to the end of the non-coated portion 146a of the positive electrode plate, for example, through a process, such as laser welding, resistance welding, ultrasonic wave welding, soldering, or the like.

The second current collecting plate 145 is bound to the bottom of the electrode assembly 141. The second current collecting plate 145 is made of a conductive metal, such as aluminum, copper or nickel, and is connected electrically with the non-coated portion 146b of the negative electrode plate. One surface of the second current collecting plate 145 may be bound to the non-coated portion 146b of the negative electrode plate, and the other surface may be bound to the internal bottom surface of the battery can 142. Herein, the binding may be carried out through a process, such as laser welding, resistance welding, ultrasonic wave welding, soldering, or the like.

Meanwhile, the cylindrical battery 140 according to the present disclosure may further include an insulator 146, if necessary. The insulator 146 may be disposed in such a manner that it may cover the top surface of the first current collecting plate 144. When the insulator 146 covers the first current collecting plate 144, it is possible to prevent the first current collecting plate 144 from being in direct contact with the inner circumferential surface of the battery can 142.

The insulator 146 is provided with a lead hole 151 so that the lead 149 extended upwardly from the first current collecting plate 144 may be drawn. The lead 149 is drawn upwardly through the lead hole 151 and is bound to the bottom surface of the linking plate 143c or the bottom surface of the cap plate 143a.

The insulator 146 may include a polymer resin material having insulating property, such as polyethylene, polypropylene, polyimide or polybutylene terephthalate.

Meanwhile, the cylindrical battery 140 according to the present disclosure may further include a venting portion 152 formed on the bottom surface of the battery can, if necessary. The venting portion 152 corresponds to a zone having a smaller thickness as compared to the surrounding zone of the bottom surface of the cylindrical battery 140. Since the venting portion 152 has a small thickness, it is structurally weak as compared to the surrounding zone. Therefore, when the internal pressure of the cylindrical battery 140 increases beyond a predetermined level, the gases inside the battery can may be discharged to the outside, while the venting portion 152 is ruptured, thereby preventing explosion of the battery.

FIG. 3 is a sectional view illustrating the cylindrical battery having a tab-less structure according to another embodiment of the present disclosure. Hereinafter, the cylindrical battery according to another embodiment of the present disclosure will be explained with reference to FIG. 3. However, FIG. 3 merely illustrate an embodiment of the present disclosure, and the structure of the cylindrical battery according to the present disclosure is not limited to the scope disclosed in FIG. 3.

Referring to FIG. 3, the cylindrical battery 170 according to another embodiment of the present disclosure is different from the cylindrical battery 140 as shown in FIG. 2 in terms of the structures of the battery can and sealing body, and is substantially the same as the cylindrical battery 140 in terms of the constitution of the electrode assembly and electrolyte.

Particularly, the cylindrical battery 170 includes a battery can 171 through which a rivet terminal 172 penetrates. The rivet terminal 172 is installed on the closed surface (top surface in the drawing) of the battery can 171. The rivet terminal 172 is riveted in the through-hole of the battery can 171 with an insulating second gasket 173 interposed therebetween. The rivet terminal 172 is exposed to the outside in the direction opposite to the direction of gravity.

The rivet terminal 172 includes a terminal exposing portion 172a and terminal inserting portion 172b. The terminal exposing portion 172a is exposed to the outside of the closed surface of the battery can 171. The terminal exposing portion 172a may be disposed approximately at the central portion of the closed surface of the battery can 171. The largest diameter of the terminal exposing portion 172a may be formed to be larger than the largest diameter of the through-hole formed in the battery can 171. The terminal inserting portion 172b penetrates through approximately the central portion of the closed surface of the battery can 171 and may be connected electrically with the non-coated portion 146a of the positive electrode plate. The terminal inserting portion 172b may be rivet-bound onto the internal surface of the battery can 171. In other words, the end portion of the terminal inserting portion 172b may be bent toward the internal surface of the battery can 171. The largest diameter of the end portion of the terminal inserting portion 172b may be larger than the largest diameter of the through-hole of the battery can 171.

The bottom surface of the terminal inserting portion 172b may be welded to the first current collecting plate connected to the non-coated portion 146a of the positive electrode plate. An insulating cap 174 including an insulating material may be interposed between the first current collecting plate 144 and the internal surface of the battery can 171. The insulating cap 174 covers the top of the first current collecting plate and the top edge portion of the electrode assembly 141. In this manner, it is possible to prevent the non-coated portion of the outer circumferential side of the electrode assembly 141 from being in contact with the internal surface of the battery can 171 having the opposite polarity to cause a short-circuit. The terminal inserting portion 172b of the rivet terminal penetrates through the insulating cap 174 and may be welded to the first current collecting plate 144.

The second gasket 173 is interposed between the battery can 171 and the rivet terminal 172, thereby preventing the battery can 171 and the rivet terminal 172 having the opposite polarity to each other from being in electric contact with each other. In this manner, the top surface of the battery can 171 having an approximately flat shape may function as a positive electrode terminal of the cylindrical battery 170.

The second gasket 173 includes a gasket exposing portion 173a and gasket inserting portion 173b. The gasket exposing portion 173a is interposed between the terminal exposing portion 172a of the rivet terminal 172 and the battery can 171. The gasket inserting portion 173b is interposed between the terminal inserting portion 172b of the rivet terminal 172 and the battery can 171. The gasket inserting portion 173b is deformed upon the riveting of the terminal inserting portion 172b so that it may be in close contact with the internal surface of the battery can 171. For example, the second gasket 173 may include a polymer resin having insulating property.

The gasket exposing portion 173a of the second gasket 173 may have a form extended in such a manner that it may cover the outer circumferential surface of the terminal exposing portion 172a of the rivet terminal 172. When the second gasket 173 covers the outer circumferential surface of the rivet terminal 172, it is possible to prevent the generation of a short-circuit during the binding of an electric connecting part, such as a bus bar, to the top surface of the battery can 171 and/or the rivet terminal 172. Although it is not shown in the drawing, the gasket exposing portion 173a may have a form extended in such a manner that it may cover a part of the top surface as well as the outer circumferential surface of the terminal exposing portion 172a.

When the second gasket includes a polymer resin, the second gasket 173 may be bound to the battery can 171 and the rivet terminal 172 through hot fusion. In this case, the binding interface between the second gasket 173 and the rivet terminal 172 and the binding surface between the second gasket 173 and the battery can 171 may have reinforced air-tight property. Meanwhile, when the gasket exposing portion 173a of the second gasket 173 has a form extended to the top surface of the terminal exposing portion 172a, the rivet terminal 172 may be bound integrally with the second gasket 173 through insert injecting molding.

The portion 175 except the region occupied by the rivet terminal 172 and the second gasket 173 of the top surface of the battery can 171 corresponds to the negative electrode terminal having the opposite polarity to the rivet terminal 172.

The second current collecting plate 176 is bound to the bottom of the electrode assembly 141. The second current collecting plate 176 includes a conductive metal, such as aluminum, steel, copper or nickel, and is connected electrically to the non-coated portion 146b of the negative electrode plate.

Preferably, the second current collecting plate 176 is connected electrically to the battery can 171. For this purpose, at least a part of the edge portion of the second current collecting plate 176 may be interposed and fixed between the internal surface of the battery can 171 and the first gasket 178b. For example, at least a part of the edge portion of the second current collecting plate 176 may be fixed at the beading portion 180 through welding, while being supported on the bottom end surface of the beading portion 180 formed at the bottom end of the battery can 171. In a variant, at least a part of the edge portion of the second current collecting plate 176 may be welded directly to the inner wall surface of the battery can 171.

The second current collecting plate 176 may be provided with a plurality of surface irregularities (not shown) formed radially on the surface facing the non-coated portion 146b. When such surface irregularities are formed, they may be press-fitted in the non-coated portion 146b by pushing the second current collecting plate 176.

Preferably, the second current collecting plate 176 and the end portion of the non-coated portion 146b may be bound to each other through welding, such as laser welding.

The sealing body 178 configured to seal the open bottom end of the battery can 171 includes a cap plate 178a and a first gasket 178b. The first gasket 178b electrically separates the cap plate 178a from the battery can 171. A crimping portion 181 fixes the edge of the cap plate 178a together with the first gasket 178b. The cap plate 178a is provided with a venting portion 179. The venting portion 179 has substantially the same constitution as in the above-described embodiment.

Preferably, the cap plate 178a is made of a conductive metal. However, since the first gasket 178b is interposed between the cap plate 178a and the battery can 171, the cap plate 178a shows no electrical polarity. The sealing body 178 functions to seal the open bottom end of the battery can 171 and to emit gases when the internal pressure of the cylindrical battery 170 increases above the critical value.

Preferably, the rivet terminal 172 connected electrically to the non-coated portion 146a of the positive electrode plate is used as a positive electrode terminal. **In** addition, the portion 175, except the rivet terminal 172, of the top surface of the battery can 171 connected electrically to the non-coated portion 146b of the negative electrode plate through the second current collecting plate 176 is used as a negative electrode terminal. As such, when two electrode terminals are disposed at the top of the cylindrical battery, it is possible to dispose an electric connecting part, such as a bus bar, only at one side of the cylindrical battery 170. This allows simplification of the structure of a battery pack and improvement of energy density. In addition, since the portion 175 used as a negative electrode terminal has an approximately flat form, it is possible to ensure a sufficient contact area in bonding an electric connecting part, such as a bus bar. Therefore, the cylindrical battery 170 can reduce the resistance at the bonding site of the electric connecting part to a desired level.

When a cylindrical lithium secondary battery is formed to have the above-described tab-less structure, current collection is lower as compared to the conventional battery provided with an electrode tab, and thus heat emission in the battery can be reduced effectively, thereby providing the battery with improved thermal safety.

In another aspect of the present disclosure, there is provided a method for manufacturing a cylindrical secondary battery, including the steps of:
preparing a positive electrode, a negative electrode and a separator;
stacking the separator at least once in such a manner that the separator may be interposed between the positive electrode and the negative electrode, thereby forming an electrode-separator stack;
winding the electrode-separator stack in one direction to form a jelly roll-type electrode assembly;
allowing the electrode assembly to be received in a can, and injecting an electrolyte to the can in which the electrode assembly is received;
sealing the open end of the can to obtain a battery; and
carrying out activation of the battery under the conditions of room temperature and ambient pressure.

Each of the constitutional elements is the same as described above.

Particularly, the method according to the present disclosure is characterized by carrying out the battery activation step under the conditions of room temperature and ambient pressure.

In the battery activation step, initial charge is carried out to activate an electrode active material and to form a solid electrolyte interphase (SEI) film on the surface of an electrode. In general, gases are generated inevitably inside of the battery in the battery activation step through the decomposition of an electrolyte, or the like. Therefore, it is general to remove the gases generated in the battery by carrying out battery activation under a predetermined high pressure condition in order to activate the battery.

However, in the cylindrical secondary battery according to the present disclosure, the can outside of the jelly roll functions as an outer wall, and thus the can may face pressure when volume swelling occurs as lithium metal is produced, thereby performing pressurization in itself. Therefore, since a separate high pressure condition, particularly a pressurization condition using a jig, is not required in the battery activation step, there is an advantage of convenience in processing.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 97 parts by weight of LiFePO₄ as a positive electrode active material, 1.5 parts by weight of carbon nanotubes as a conductive material and 1.5 parts by weight of polyvinylidene fluoride (PVDF, Kureha) as a binder were mixed, and the resultant mixture was introduced to N-methyl-2-pyrrolidone as a solvent, followed by mixing, to prepare a positive electrode slurry. The positive electrode slurry was applied onto one surface of an aluminum current collector sheet having a thickness of 15 µm and dried at 120°C, and then pressing was carried out to prepare a positive electrode plate having a positive electrode loading amount of 560 mg/25 cm² and a thickness of 200 µm.

As a negative electrode plate, copper foil having a thickness of 10 µm was prepared.

A separator was interposed between the positive electrode plate and the negative electrode plate prepared as described above to perform stacking in the order of separator/positive electrode plate/separator/negative electrode plate, and then the resultant stack was wound to obtain a jelly roll-type electrode assembly. The electrode assembly obtained as described above was inserted to a cylindrical battery can, and an electrolyte was injected thereto to obtain a cylindrical secondary battery as a 21700 cell.

### Comparative Example 1

A cylindrical secondary battery as a 21700 cell was obtained in the same manner as Example 1, except that a negative electrode active material (mixture containing graphite and SiO at a weight ratio of 95:5), conductive material (Super C), styrene butadiene rubber (SBR) and carboxymethyl cellulose (CMC) were mixed at a weight ratio of 96:2:1.5:0.5 in water to prepare a negative electrode slurry. The negative electrode slurry was applied onto one surface of copper foil having a thickness of 10 µm and dried at 150°C, and then pressing was carried out to prepare a negative electrode, and a positive electrode plate using the amount of positive electrode active material, positive electrode thickness and positive electrode loading amount as shown in the following Table 1 was prepared.

### Example 2

A cylindrical secondary battery as 21700 cell was obtained in the same manner as Example 1, except that a positive electrode plate using the amount of positive electrode active material, positive electrode thickness and positive electrode loading amount as shown in the following Table 1 was prepared.

**[Table 1]**

| | Amount of positive electrode active material (g) | Positive electrode thickness (µm) | Positive electrode loading amount (mg/25cm²) | Initial charge capacity (mAh) | Initial discharge capacity (mAh) | Energy density per volume (Wh/L) | Capacity retention at 20^{th} cycle (%) |
|---|---|---|---|---|---|---|---|
| Comp. Ex. 1 | 26 | 180 | 490 | 4933 | 4526 | 607 | 93.6 |
| Ex. 1 | 38 | 200 | 560 | 7014 | 6711 | 901 | 95.9 |
| Ex. 2 | 37 | 210 | 540 | 6919 | 6621 | 889 | 95.3 |

### Test Example

### 1. Charge/Discharge Capacity

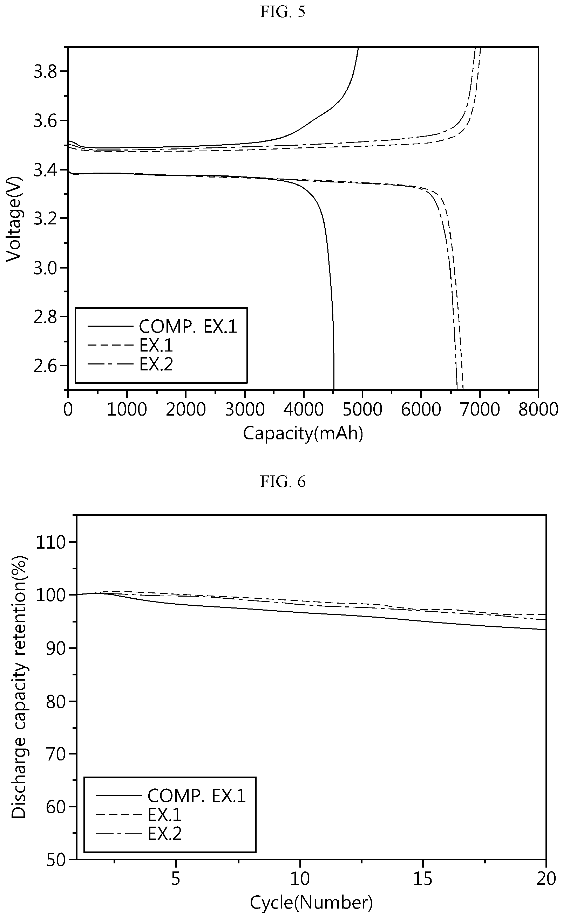

The cylindrical secondary battery according to each of Examples 1 and 2 and Comparative Example 1 is charged to 3.9 V in a constant current/constant voltage (CC/CV) mode (cutoff current 0.1 C) at a temperature of 25°C and at a constant current of 0.1 C, and then discharged in a CC mode to 2.5 V. Then, the initial charge/discharge capacity was determined. The results are shown in FIG. 5.

The cylindrical secondary battery according to Comparative Example 1 can accept up to 26 g of the positive electrode active material within the range of operation thereof. However, when using the negative electrode including no negative electrode active material layer according to each of Examples 1 and 2, the amount of positive electrode active material that can be introduced into the cell is increased to maximize the energy density per volume. Examples 1 and 2 show a charge capacity and discharge capacity increased by about 50% as compared to Comparative Example 1.

### 2. Test of Life

To determine the life characteristics of the cylindrical secondary battery according to each of Examples and 1 and 2 and Comparative Example 1, the cylindrical secondary battery was charged at the first cycle to 3.9 V under a constant current/constant voltage (CC/CV) condition at a temperature of 25°C and at a constant current of 0.1 C, and then charged in a CC mode at 0.1 C. Then, the cylindrical secondary battery was allowed to stand for 30 minutes and discharged at 0.1 C to 2.5 V, and the discharge capacity was determined.

The subsequent charge/discharge cycles were repeatedly carried out in a voltage range of 3.9-2.5 V at 0.1 C to the 25^{th} cycle, and the discharge capacity retention was determined every cycle. The results are shown in FIG. 6. It can be seen that Examples 1 and 2 show a higher charge capacity and discharge capacity as compared to Comparative Example 1, while providing a capacity retention at an equivalent level to Comparative Example 1.

### 3. Hot Box Test

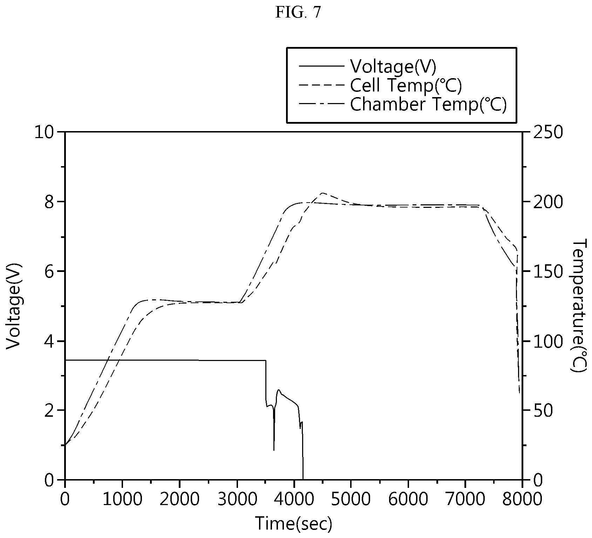

To determine the safety of the cylindrical secondary battery according to Example 1, a hot box test was carried out. The hot box test includes introducing a charged battery to a chamber capable of convection, and measuring the cell temperature of the secondary battery, while increasing the temperature to 130°C at a heating rate of 5°C/min, maintaining the temperature for 30 minutes, increasing the temperature to 200°C at a heating rate of 5°C/min and maintaining the temperature for 1 hour. The results are shown in FIG. 7.

After carrying out the hot box test, it is shown that the cylindrical secondary battery according to Example 1 maintains its temperature at 130°C for about 30 minutes and at 200°C for about 1 hour. This is at a level similar to the hot box test result of a cylindrical secondary battery having a negative electrode coating layer, which suggests that Example 1, despite the absence of a negative electrode coating layer, can ensure excellent safety at a level equivalent to the battery having a negative electrode coating layer.

## Claims

1. A cylindrical secondary battery comprising:
an electrode assembly comprising a positive electrode, a negative electrode and a separator interposed between the positive electrode and the negative electrode; a battery can configured to receive the electrode assembly; and a sealing body configured to seal the open end of the battery can,
wherein the positive electrode is provided with a positive electrode current collector and a positive electrode active material layer disposed on at least one surface of the positive electrode current collector and containing a positive electrode active material, and
the negative electrode includes a negative electrode current collector but has no negative electrode active material layer.

2. The cylindrical secondary battery according to claim 1, wherein the negative electrode comprises the negative electrode current collector alone.

3. The cylindrical secondary battery according to claim 1, wherein the positive electrode active material comprises lithium iron phosphate (LFP), lithium manganese iron phosphate (LMFP), lithium cobalt oxide (LCO), lithium nickel cobalt manganese oxide (NCM), lithium nickel cobalt aluminum oxide (NCA), lithium nickel cobalt manganese aluminum oxide (NCMA), lithium manganese oxide (LMO), overlithiated oxide (OLO), cobalt-free oxide, nickel-free oxide, manganese-free oxide, manganese-rich oxide or a mixture thereof.

4. The cylindrical secondary battery according to claim 1, wherein the positive electrode active material is used in an amount of 80-99 parts by weight based on 100 parts by weight of the total weight of the positive electrode active material layer.

5. The cylindrical secondary battery according to claim 1, wherein the positive electrode has a loading amount of 110-120% relative to the loading amount of the positive electrode of a cylindrical secondary battery having a negative electrode active material layer.

6. The cylindrical secondary battery according to claim 1, wherein the positive electrode has a loading amount of 500-600 mg/cm².

7. The cylindrical secondary battery according to claim 1, wherein the positive electrode has a thickness of 110-120% relative to the thickness of the positive electrode of a cylindrical secondary battery having a negative electrode active material layer.

8. The cylindrical secondary battery according to claim 1, wherein the positive electrode has a thickness of 190-220 µm.

9. The cylindrical secondary battery according to claim 1, wherein a capacity increased by 140-180% relative to the capacity of a cylindrical secondary battery having a negative electrode active material layer.

10. The cylindrical secondary battery according to claim 1, wherein an energy density per volume of 850 Wh/L or higher.

11. The cylindrical secondary battery according to claim 1, wherein the negative electrode current collector has a structure of the following 1) or 2):
1) a structure including a porous zone and non-porous zone, wherein the porous zone is at least partially in contact with at least one surface of the separator;
2) a multilayer structure including at least one porous sheet and at least one metallic sheet.

12. The cylindrical secondary battery according to claim 1, which has a form factor ratio of 0.25 or more.

13. The cylindrical secondary battery according to claim 1, which is a 18650 cell, a 21700 cell, a 46110 cell, a 48750 cell, a 48110 cell, a 48800 cell or a 46800 cell.

14. The cylindrical secondary battery according to claim 1, which is a battery having a tab-less structure including no electrode tab.

15. The cylindrical secondary battery according to claim 1, which comprises a liquid electrolyte.

16. A method for manufacturing a cylindrical secondary battery, comprising the steps of:
preparing a positive electrode, a negative electrode and a separator;
stacking the separator at least once in such a manner that the separator is interposed between the positive electrode and the negative electrode, thereby forming an electrode-separator stack;
winding the electrode-separator stack in one direction to form a jelly roll-type electrode assembly;
allowing the electrode assembly to be received in a can, and injecting an electrolyte to the can in which the electrode assembly is received;
sealing the open end of the can to obtain a battery; and
carrying out activation of the battery under the conditions of room temperature and ambient pressure,
wherein the positive electrode is provided with a positive electrode current collector and a positive electrode active material layer disposed on at least one surface of the positive electrode current collector and containing a positive electrode active material, and
the negative electrode comprises a negative electrode current collector but has no negative electrode active material layer.
